# EUROPEAN PATENT APPLICATION

(11) **EP 4 151 600 A1**
(43) Date of publication of application: **22.03.2023**
(21) Application number: 20935499.2
(22) Date of filing: 24.11.2020
(51) Int. Cl.: C01D 7/02, C01C 1/24

(54) **METHOD FOR CO-PRODUCING SODIUM BICARBONATE AND AMMONIUM SULFATE FROM SODIUM SULFATE**

(30) Priority: 10.05.2020 CN 202010400271
(71) Applicant: Beijing Jingcheng Technology Co., Ltd., Beijing 100043 (CN)
(72) Inventor: ZHANG, Yang, Beijing 100190 (CN); FAN, Bingqiang, Beijing 100190 (CN); ZHANG, Hedong, Zhengzhou, Henan 450003 (CN); SHEN, Changshuai, Zhengzhou, Henan 450003 (CN)
(74) Representative: Pfenning, Meinig & Partner mbB
(86) International application number: PCT/CN2020/130988
(87) International publication number: WO 2021/227438

(57) **Abstract**

Provided is a method for co-producing sodium bicarbonate and ammonium sulfate from sodium sulfate, comprising the following steps: (1) enabling a sodium sulfate solution to react with ammonium bicarbonate to prepare a sodium bicarbonate solid and a sodium bicarbonate mother liquor; (2) adding sodium sulfate in the sodium bicarbonate mother liquor, and reacting under a certain condition and performing liquid-solid separation, respectively obtaining a double salt and a salting-out mother liquor; (3) washing the double salt obtained in step (2) to obtain an ammonium sulfate solution and sodium sulfate; and (4) evaporating the ammonium sulfate solution to obtain an ammonium sulfate product, returning an ammonium sulfate mother liquor and condensed evaporated water to step (3) for washing the double salt. The method has a short process and low energy consumption, and the prepared product has high purity.

## Description

### TECHNICAL FIELD

The present application belongs to the field of chemical technology, and relates to a method for co-producing sodium bicarbonate and ammonium sulfate from sodium sulfate.

### BACKGROUND

As an important industrial and daily-use chemical, sodium bicarbonate is generally prepared from sodium chloride by Solvay process or combined alkali process, and the raw material sodium chloride is mostly obtained from seawater by drying and refining or from salt wells. With the increasing demand for sodium carbonate in industrial production, the raw material sodium chloride is in supply tension. Additionally, China has a large production of sodium sulfate. According to statistics, China has the capacity to produce more than 10 million tons of the sodium sulfate by-product a year, but the sales volume of sodium sulfate is less than 50%. A large amount of sodium sulfate is in excess and stored in the yard, which leads to serious environmental risks and waste of resources. If sodium sulfate can be used as a raw material instead of sodium chloride to prepare sodium bicarbonate and ammonium sulfate, the economic and environmental benefits will be extremely significant. The ideal way to prepare sodium carbonate from sodium sulfate is to prepare sodium bicarbonate by solution double replacement. However, due to the low conversion rate of sodium sulfate in double replacement reaction, the utilization rate of sodium sulfate is less than 60%, and pure ammonium sulfate cannot be obtained, and the cost is high, which prevents the developing of the technology of preparing sodium carbonate from sodium sulfate.

The key of preparing sodium bicarbonate from sodium sulfate is how to improve the utilization efficiency of sodium ions. Scientists in the Soviet Union once added organic amines to the reaction system of sodium sulfate to prepare sodium carbonate to promote the double replacement reaction, which could increase the conversion rate to more than or equal to 90%. However, it was extremely difficult to separate such organic matter because it was soluble in water, and it was difficult to sell the products because of the residues of organic matter in ammonium sulfate and sodium carbonate. In addition, the loss of organic amine in the production process is high, and the production cost is too high.

There are many researches on the preparation of sodium bicarbonate from sodium sulfate in China. CN101544385A discloses a method for co-producing sodium carbonate and calcium sulfate with sodium sulfate as a raw material as well as organic amine as an accessory. This method draws lessons from the technological route of the former Soviet Union, and reaches a sodium conversion rate of more than or equal to 90%. However, organic amine has high boiling point, high viscosity and high energy consumption for evaporation and recovery. Sodium bicarbonate and calcium sulfate have many organic amines, which are difficult to recover, causing many losses and high production costs. CN104355326A, CN102198953A and CN202016881U disclose a method for co-producing sodium bicarbonate and ammonium sulfate by double replacement method. This method uses sodium sulfate and ammonium bicarbonate as raw materials to obtain sodium bicarbonate through double replacement reaction; a separated mother liquor is deaminated at high temperature, evaporated and concentrated at 130°C to obtain sodium sulfate crystal; after separation, the mother liquor is cooled and crystallized to obtain a double salt of sodium sulfate and ammonium sulfate; then, the mother liquor is evaporated and crystallized to obtain ammonium sulfate product. This method has complex process, high energy consumption in the repeated high-temperature and cooling processes, low utilization rate of sodium ions and sulfate radicals, large evaporation depth, large material circulation and high production cost, and at present, there is no industrial precedent. CN87104642, CN1046142A, US5830442 and CN1761617A disclose a process method, in which a sodium bicarbonate mother liquor is deeply cooled to obtain sodium sulfate crystal, so that the mother liquor has an ammonium sulfate-sodium sulfate ratio of 2:1 approximately, and then ammonium sulfate is obtained by evaporation crystallization. The cooling temperature of this method is too low, the optimal cooling temperature is -5°C to -2°C, the energy consumption is high, the overall yield is low, the utilization rate of sulfate radicals is only about 25%, the material circulation is large, and the production and operation cost is high, and at present, its industrialization has not been realized. CN105000579A and CN105712382A disclose a precipitation method, in which sodium bicarbonate is prepared by double replacement reaction of ammonium bicarbonate and sodium sulfate, and then lime is added in the sodium bicarbonate mother liquor to recover the ammonia. However, the recovery rate of ammonia in this process is only about 50%, which results in waste of resources and increases operating costs. In addition, the produced calcium sulfate is high in yield, low in value, poor in quality, difficult to sell and easy to cause secondary pollution. CN103754898A discloses a method for preparing sodium chloride from sodium sulfate and calcium chloride and producing sodium carbonate by combining the combined alkali preparation method. This method uses sodium sulfate and calcium chloride as raw materials, and gives a sodium chloride solution and a calcium sulfate solid through the double replacement reaction, and further produces sodium carbonate by the combined alkali preparation method. This method is simple and feasible, and the process is mature, but the generation of new solid waste calcium sulfate has not been avoided, so that this method has not been popularized and applied.

It can be seen from the above that the current technology for preparing sodium bicarbonate from sodium sulfate has some problems, such as complicated process, low utilization rate of sodium and low purity of ammonium sulfate.

### SUMMARY

The present application provides a method for co-producing sodium bicarbonate and ammonium sulfate from sodium sulfate. The method couples the dissolution of sodium sulfate with the separation of ammonium sulfate, and realizes the separation of ammonium sulfate from the system when sodium sulfate is dissolved in a sodium bicarbonate mother liquor. The method has short process and low energy consumption. A purity of the prepared ammonium sulfate satisfies the criterion of GB535, a purity of sodium bicarbonate is more than 96%, and a utilization rate of sodium ions is more than 95%.

The present application can be implemented through the technical solutions below.

A method for co-producing sodium bicarbonate and ammonium sulfate from sodium sulfate includes the following steps:
(1) adding ammonium bicarbonate in a sodium sulfate dissolved solution for reaction to prepare a sodium bicarbonate solid and a sodium bicarbonate mother liquor;
(2) adding sodium sulfate in the sodium bicarbonate mother liquor obtained from step (1), reacting under a certain condition and performing liquid-solid separation to obtain a double salt composed of sodium sulfate and ammonium sulfate and a sodium sulfate dissolved solution, respectively;
(3) washing the double salt obtained from step (2) to obtain an ammonium sulfate solution and sodium sulfate;
(4) evaporating the ammonium sulfate solution obtained from step (3) to obtain an ammonium sulfate product, and subjecting an ammonium sulfate mother liquor and a evaporated condensed water back to step (3) for washing the double salt.

In step (1), a reaction solution obtained by adding ammonium bicarbonate in the sodium sulfate dissolved solution has a total ammonium-total sodium molar ratio of (1-1.3):1, and the reaction is carried out at 25-50°C for 1-5 h.

In step (2), an addition amount of sodium sulfate is 1-1.4 times of a total sodium sulfate mass in the sodium bicarbonate mother liquor, and the reaction is carried out at 10-90°C for 1-4 h.

The sodium sulfate dissolved solution in step (1) is the sodium sulfate dissolved solution obtained from step (2).

The washing in step (3) is carried out at a temperature of 60-100°C.

The evaporating in step (4) is carried out at a temperature of 70-100°C.

The sodium sulfate obtained from step (3) is recycled for use in step (2).

The present application provides a method for preparing sodium bicarbonate and ammonium sulfate from sodium sulfate with a short process, which includes the following specific steps:
(1) reacting an sodium sulfate dissolved solution obtained from step (2) and ammonium bicarbonate to prepare a sodium bicarbonate solid and a sodium bicarbonate mother liquor;
(2) adding sodium sulfate in the sodium bicarbonate mother liquor obtained from step (1) (including sodium sulfate added from the outside and sodium sulfate obtained from step (3)), reacting and performing liquid-solid separation to obtain a double salt composed of sodium sulfate and ammonium sulfate and a sodium sulfate dissolved solution;
(3) washing the double salt obtained from step (2) to obtain an ammonium sulfate solution and sodium sulfate;
(4) evaporating the ammonium sulfate solution obtained from step (3) to obtain an ammonium sulfate product, and subjecting an ammonium sulfate mother liquor and an evaporated condensed water obtained back to step (3) for washing the double salt.

The present application has the beneficial effects as follows.
(1) The method of the present application has simple process and low energy consumption, and the industrial process can be easily implemented.
(2) The product of the present application has high purity, and a purity of sodium bicarbonate is more than 96wt%; a nitrogen content in ammonium sulfate is more than 20.5wt%, and the purity can satisfy the criterion of GB535.
(3) A utilization rate of sodium sulfate is more than 95% in the method of the present application.
(4) The preparation process of the present application is clean, and there are no waste water, waste gas and waste residue discharged.

### BRIEF DESCRIPTION OF DRAWINGS

In order to more clearly explain the embodiments of the present application or the technical solutions in the prior art, the drawings that need to be used for describing the embodiments or the prior art will be briefly introduced below. Obviously, the drawings described below are only some examples of the present application. For those skilled in the art, other drawings can be obtained according to these drawings without any creative effort.

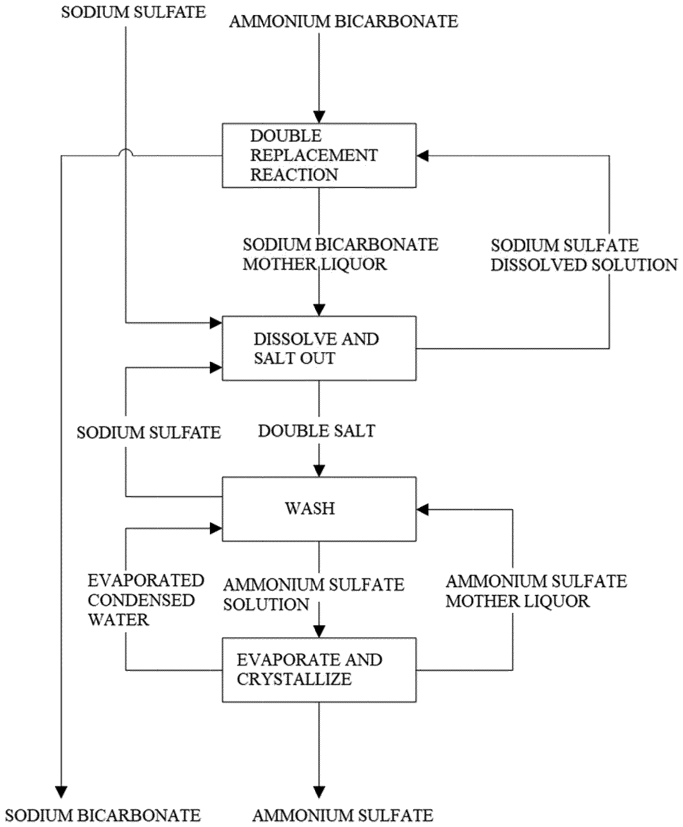

FIG. 1 is a process flow chart of co-producing sodium bicarbonate and ammonium sulfate from sodium sulfate in the present application.

### DETAILED DESCRIPTION

The technical solutions of the present application will be clearly and completely described below with reference to the examples of the present application. Obviously, the described examples are not all the examples of the present application but only part of them. All the other examples, obtained by those skilled in the art based on the examples in the present application without any creative effort, fall within the protection scope of the present application.

### Example 1

A method for co-producing sodium bicarbonate and ammonium sulfate from sodium sulfate includes the following steps:
(1) sodium sulfate was dissolved in water to obtain a sodium sulfate dissolved solution, ammonium bicarbonate was added slowly at 25°C to bring the solution a ammonium-sodium molar ratio of 1.3:1; after the system was reacted for 5 hours, liquid-solid separation was performed to obtain a sodium bicarbonate solid and a sodium bicarbonate mother liquor;
(2) sodium sulfate was added in the sodium bicarbonate mother liquor obtained from step (1) (including sodium sulfate added from the outside and the sodium sulfate obtained from step (3)), a total addition amount of the sodium sulfate was 1.4 times of a total sodium sulfate mass in the sodium bicarbonate mother liquor, the system was reacted at 90°C for 1 h, and cooled to 40°C for salting out ammonium sulfate, and liquid-solid separation was performed to obtain a double salt composed of sodium sulfate and ammonium sulfate and a sodium sulfate dissolved solution, respectively;
(3) the double salt obtained from step (2) was washed at 100°C, and liquid-solid separation was performed to obtain an ammonium sulfate solution and sodium sulfate;
(4) the ammonium sulfate solution obtained from step (3) was evaporated at 70°C to obtain an ammonium sulfate product, and an evaporation mother liquor and a evaporated condensed water were subjected back to step (3) for washing the double salt.

The ammonium sulfate has a nitrogen content of 20.92wt%, a sodium content of 0.07wt%, and a free acid of less than 0.1wt%, which satisfies the criterion of GB535-1995; the sodium bicarbonate has a purity of 97. 17wt%.

### Example 2

A method for co-producing sodium bicarbonate and ammonium sulfate from sodium sulfate includes the following steps:
(1) ammonium bicarbonate was slowly added in an sodium sulfate dissolved solution obtained from step (2) at 50°C to bring the solution a ammonium-sodium molar ratio of 1:1; after the system was reacted for 1 hour, liquid-solid separation was performed to obtain a sodium bicarbonate solid and a sodium bicarbonate mother liquor;
(2) sodium sulfate was added in the sodium bicarbonate mother liquor obtained from step (1) (including sodium sulfate added from the outside and sodium sulfate obtained from step (3)), a total addition amount of the sodium sulfate was 1.1 times of a total sodium sulfate mass in the sodium bicarbonate mother liquor, the system was reacted at 50°C for 4 h, and cooled to 10°C for salting out ammonium sulfate, and liquid-solid separation was performed to obtain a double salt composed of sodium sulfate and ammonium sulfate and a sodium sulfate dissolved solution, respectively;
(3) the double salt obtained from step (2) was washed at 60°C, and liquid-solid separation was performed to obtain an ammonium sulfate solution and sodium sulfate;
(4) the ammonium sulfate solution obtained from step (3) was evaporated at 100°C to obtain an ammonium sulfate product, and an evaporation mother liquor and a evaporated condensed water were subjected back to step (3) for washing the double salt.

The ammonium sulfate has a nitrogen content of 20.52wt%, a sodium content of 0.15wt%, and a free acid of less than 0.2wt%, which satisfies the criterion of GB535-1995; the sodium bicarbonate has a purity of 96.52wt%.

### Example 3

A method for co-producing sodium bicarbonate and ammonium sulfate from sodium sulfate includes the following steps:
(1) ammonium bicarbonate was slowly added in an sodium sulfate dissolved solution obtained from step (2) at 35°C to bring the solution a ammonium-sodium molar ratio of 1.1:1; after the system was reacted for 3 hours, liquid-solid separation was performed to obtain a sodium bicarbonate solid and a sodium bicarbonate mother liquor;
(2) sodium sulfate was added in the sodium bicarbonate mother liquor obtained from step (1) and ammonium sulfate was salted out at the same time (including sodium sulfate added from the outside and sodium sulfate obtained from step (3)), a total addition amount of the sodium sulfate was 1.2 times of a total sodium sulfate mass in the sodium bicarbonate mother liquor, the system was reacted at 60°C for 1.5 h, and cooled to 28°C for salting out ammonium sulfate, and liquid-solid separation was performed to obtain a double salt composed of sodium sulfate and ammonium sulfate and a sodium sulfate dissolved solution, respectively;
(3) the double salt obtained from step (2) was washed at 80°C, and liquid-solid separation was performed to obtain an ammonium sulfate solution and sodium sulfate;
(4) the ammonium sulfate solution obtained from step (3) was evaporated at 90°C to obtain an ammonium sulfate product, and an evaporation mother liquor and a evaporated condensed water were subjected back to step (3) for washing the double salt.

The ammonium sulfate has a nitrogen content of 21.01wt%, a sodium content of 0.05wt%, and a free acid of less than 0.1wt%, which satisfies the criterion of GB535-1995; the sodium bicarbonate has a purity of 97.62wt%.

### Example 4

A method for co-producing sodium bicarbonate and ammonium sulfate from sodium sulfate includes the following steps:
(1) ammonium bicarbonate was slowly added in an sodium sulfate dissolved solution obtained from step (2) at 30°C to bring the solution a ammonium-sodium molar ratio of 1.2:1; after the system was reacted for 2 hours, liquid-solid separation was performed to obtain a sodium bicarbonate solid and a sodium bicarbonate mother liquor;
(2) sodium sulfate was added in the sodium bicarbonate mother liquor obtained from step (1) and ammonium sulfate was salted out at the same time (including sodium sulfate added from the outside and sodium sulfate obtained from step (3)), a total addition amount of the sodium sulfate was 1.3 times of a total sodium sulfate mass in the sodium bicarbonate mother liquor, the system was reacted at 70°C for 1.5 h, and cooled to 35°C for salting out ammonium sulfate, and liquid-solid separation was performed to obtain a double salt composed of sodium sulfate and ammonium sulfate and a sodium sulfate dissolved solution, respectively;
(3) the double salt obtained from step (2) was washed at 80°C, and liquid-solid separation was performed to obtain an ammonium sulfate solution and sodium sulfate;
(4) the ammonium sulfate solution obtained from step (3) was evaporated at 80°C to obtain an ammonium sulfate product, and an evaporation mother liquor and a evaporated condensed water were subjected back to step (3) for washing the double salt.

The ammonium sulfate has a nitrogen content of 20.8wt%, a sodium content of 0.1 wt%, and a free acid of less than 0.1wt%, which satisfies the criterion of GB535-1995; the sodium bicarbonate has a purity of 97.97wt%.

The above is only the preferred examples of the present application, and should not be used to limit the present application. The protection scope of the present application is defined by the claims.

## Claims

1. A method for co-producing sodium bicarbonate and ammonium sulfate from sodium sulfate, comprising the following steps:
(1) adding ammonium bicarbonate in a sodium sulfate dissolved solution for reaction to prepare a sodium bicarbonate solid and a sodium bicarbonate mother liquor;
(2) adding sodium sulfate in the sodium bicarbonate mother liquor obtained from step (1), reacting under a certain condition and performing liquid-solid separation to obtain a double salt composed of sodium sulfate and ammonium sulfate and a sodium sulfate dissolved solution, respectively;
(3) washing the double salt obtained from step (2) to obtain an ammonium sulfate solution and sodium sulfate;
(4) evaporating the ammonium sulfate solution obtained from step (3) to obtain an ammonium sulfate product, and subjecting an ammonium sulfate mother liquor and a evaporated condensed water back to step (3) for washing the double salt.

2. The method for co-producing sodium bicarbonate and ammonium sulfate from sodium sulfate according to claim 1, wherein in step (1), a reaction solution obtained by adding ammonium bicarbonate in the sodium sulfate dissolved solution has a ammonium-sodium molar ratio of (1-1.3): 1, and the reaction is carried out at 25-50°Cfor 1-5 h.

3. The method for co-producing sodium bicarbonate and ammonium sulfate from sodium sulfate according to claim 1, wherein in step (2), an addition amount of sodium sulfate is 1-1.4 times of a total sodium sulfate mass in the sodium bicarbonate mother liquor, and the reaction is carried out at 10-90°C for 1-4 h.

4. The method for co-producing sodium bicarbonate and ammonium sulfate from sodium sulfate according to claim 1, wherein the sodium sulfate dissolved solution in step (1) is the sodium sulfate dissolved solution obtained from step (2).

5. The method for co-producing sodium bicarbonate and ammonium sulfate from sodium sulfate according to claim 1, wherein the washing in step (3) is carried out at a temperature of 60-100°C.

6. The method for co-producing sodium bicarbonate and ammonium sulfate from sodium sulfate according to claim 1, wherein the evaporating in step (4) is carried out at a temperature of 70-100°C.

7. The method for co-producing sodium bicarbonate and ammonium sulfate from sodium sulfate according to claim 1, wherein the sodium sulfate obtained from step (3) is recycled for use in step (2).

8. The method for co-producing sodium bicarbonate and ammonium sulfate from sodium sulfate according to any one of claims 1-7, comprising the following steps:
(1) reacting an sodium sulfate dissolved solution and ammonium bicarbonate to prepare a sodium bicarbonate solid and a sodium bicarbonate mother liquor;
(2) adding sodium sulfate in the sodium bicarbonate mother liquor obtained from step (1), reacting and performing liquid-solid separation to obtain a double salt composed of sodium sulfate and ammonium sulfate and a sodium sulfate dissolved solution, wherein the sodium sulfate dissolved solution obtained from step (2) is recycled for use in step (1) to react with ammonium bicarbonate;
(3) washing the double salt obtained from step (2) to obtain an ammonium sulfate solution and sodium sulfate;
(4) evaporating the ammonium sulfate solution obtained from step (3) to obtain an ammonium sulfate product, and subjecting an ammonium sulfate mother liquor and an evaporated condensed water obtained back to step (3) for washing the double salt.

9. The method for co-producing sodium bicarbonate and ammonium sulfate from sodium sulfate according to claim 8, wherein the sodium sulfate in step (2) comprises sodium sulfate added from the outside and sodium sulfate obtained from step (3).
